# EUROPÄISCHE PATENTANMELDUNG

(11) **EP 2 829 381 A1**
(43) Veröffentlichungstag der Anmeldung: **28.01.2015**
(21) Anmeldenummer: 13178084.3
(22) Anmeldetag: 25.07.2013
(51) Int. Cl.: B29C 53/48, B29C 65/36

(54) **Schweißvorrichtung zum Herstellen von Tubenkörpern**

(71) Anmelder: PackSys Global (Switzerland) Ltd., 8630 Rüti (CH)
(72) Erfinder: Esser, Ulrich, 8630 Rüti (CH)
(74) Vertreter: Wagner, Kilian

(57) **Zusammenfassung**

Die Erfindung betrifft eine Schweißvorrichtung (1) zum Herstellen von Tubenrohrkörpern durch randseitiges Verschweißen zweier Substratränder (2, 3), insbesondere zweier Laminatränder, mit einem endlosen, umlaufenden, ersten Kontaktband (5) zum Anlegen an das Substrat (4), einer Energiequelle (12, 13) zum Bereitstellen einer Schweißenergie. Erfindungsgemäß ist vorgesehen, dass das erste Kontaktband (5) eine Polyimid-Kontaktfläche (35) zum Anlegen an das Substrat (4) aufweist.

## Beschreibung

Die vorliegende Erfindung betrifft eine Schweißvorrichtung nach dem Oberbegriff des Anspruchs 1, ein Kontaktband zur Verwendung in einer solchen Schweißvorrichtung sowie ein Verfahren nach dem Oberbegriff des unabhängigen Anspruchs 14.

Aus dem Stand der Technik ist es bekannt, Tubenrohrkörper aus einem Substrat herzustellen, indem zwei Ränder des Substrates verschweißt werden, wobei das Substrat zwischen zwei Kontaktbändern, häufig in Form von über eine HF-Strahlungsquelle erhitzten Stahlbändern, aufgenommen und aufgeschmolzen wird. Hierbei schmilzt die Laminatoberfläche, wodurch sie an dem Kontaktband anhaften kann, was zum einen die Qualität der hergestellten Tubenrohrkörper, insbesondere der Schweißnaht, und zum anderen die Schweißvorrichtung selbst beeinträchtigen kann. Dies hat zur Folge, dass die Schweißvorrichtung gegebenenfalls häufig gereinigt und/oder gewartet werden muss.

Daher werden im Stand der Technik, die als Schweißbänder zum Einsatz kommenden Stahlbänder mit Teflon (PTFE) beschichtet, um zu verhindern, dass der aufgeschmolzene Kunststoff an den Schweißbändern haften bleibt und so Spuren auf den herzustellenden Schweißnähten hinterlässt. Zum Aufbringen der Teflonschicht wird die Oberfläche des Stahlbands aufgeraut und Teflon unter Druck aufgetragen, sodass das Teflon mechanisch am Stahlband haftet. Durch die begrenzte mechanische Haftung kann es zu Abspaltungen des Teflon vom Stahlband kommen, wodurch die Qualität der Tubenkörper beeinträchtigt wird, da sich zum einen Teflon an den Tubenkörpern absetzen kann und zum anderen das Stahlband (durch teilweisen Verlust der Antihaftschicht) wieder stärker haftet. Auch ist Teflon für Fließverhalten bekannt, d.h. das Teflon wandert im Verlauf der Zeit aus den am meisten mit Druck beaufschlagten Bereichen hinaus, wodurch langfristig die Dicke im funktionalen Bereich abnimmt und das Band unbrauchbar wird.

Ausgehend vom Stand der Technik liegt der vorliegenden Erfindung die Aufgabe zugrunde, eine gattungsgemäße Schweißvorrichtung, ein Kontaktband zur Verwendung in einer solchen Schweißvorrichtung sowie ein gattungsgemäßes Verfahren so zu verbessern, dass die Qualität der hergestellten Tubenrohrkörper verbessert wird und die Standzeiten der Schweißvorrichtung erhöht werden.

Diese Aufgabe wird durch eine Vorrichtung mit den Merkmalen des Anspruchs 1, durch ein Kontaktband mit den Merkmalen des Anspruchs 13 sowie durch ein Verfahren mit den Merkmalen des unabhängigen Anspruchs 14 gelöst; vorteilhafte Weiterbildungen der Erfindung sind in den Unteransprüchen beschrieben. Zur Vermeidung von Wiederholungen sollen vorrichtungsgemäß offenbarte Merkmale als verfahrensgemäß offenbart und beanspruchbar gelten sowie verfahrensgemäß offenbarte Merkmale als vorrichtungsgemäß offenbart und beanspruchbar gelten. Merkmale, die die Ausbildung des Kontaktbandes im Rahmen der Schweißvorrichtung oder allgemein betreffen, sollen gleichermaßen für ein Kontaktband in Alleinstellung nach Anspruch 13 sowie für eine Schweißvorrichtung mit einem solchen Kontaktband nach Anspruch 1 offenbart und beanspruchbar gelten.

Bei einer Schweißvorrichtung, wie sie bei der Erfindung zum Einsatz kommt, werden zwei Substratränder verschweißt, wobei ein endloses Kontaktband an dem Substrat anliegt und wobei das Substrat mittels einer dem Substrat und/oder dem Kontaktband zugeordneten Energiequelle verschweißt wird. Das Substrat wird hierbei an der Energiequelle vorbei gefördert. Als Energiequelle kann beispielsweise ein induktives Element zum Einsatz kommen, das eine metallische Schicht erwärmt.

Durch das erfindungsgemäße Vorsehen einer Kontaktfläche am Kontaktband, die Polyimid aufweist, wird ein Abrieb zwischen Kontaktband und Substrat verringert. Außerdem wird ein Fließen, wie es bei PTFEbeschichteten Bändern auftreten kann verhindert, weil Polyimid ein vernetztes Polymer ist. Als Kontaktfläche ist hierbei eine Fläche zu verstehen, die dazu ausgebildet und angeordnet ist, mit dem Substrat in Kontakt zu treten.

Polyimid zeichnet sich durch seine geringe Adhäsion bei gleichzeitig hoher Temperaturbeständigkeit sowie durch Formstabilität, insbesondere auch gegenüber Teflonbeschichtungen, aus. Durch die geringe Adhäsion wird ein Abrieb und somit eine Degradation des Substrats und/oder der Schweißvorrichtung entgegen gewirkt. Durch die höhere Temperaturbeständigkeit lässt sich unter anderem auch die Prozessgeschwindigkeit erhöhen, wodurch die Effizienz der Schweißvorrichtung gesteigert wird. Vorzugsweise kommen, bevorzugt mindestens 75 Gewichtsprozent, besonders bevorzugt zu mindestens 95 Gewichtsprozent, aromatische Polyimide als Polyimide für die Polyimid-Kontaktfläche zum Einsatz.

Allgemein ergibt sich durch die Erfindung eine überraschende Verwendung von Polyimid als Antihaftschicht bei Schweißvorrichtungen zum Herstellen von Tubenrohrköprern, da Polyimid durch seine schwere Auftragbarkeit, insbesondere gegenüber Teflon, auf den ersten Blick ungeeigneter scheint und die Vorteile von der Verwendung von Polyimid in diesem Bereich zunächst nicht ohne weiteres ersichtlich sind.

Weiterbildungsgemäß bevorzugt liegt das Substrat beidseitig jeweils an einem Kontaktband an, es ist also neben dem vorbeschriebenen (ersten) Kontaktband ein zweites Kontaktband vorgesehen. Vorzugsweise weisen beide Kontaktbänder eine Kontaktfläche mit Polyimid zum Anlegen an das Substrat auf. Hierdurch wird gewährleistet, dass das Substrat beidseitig geführt wird, wobei eine Scherkraft im Substrat gering gehalten wird.

Bevorzugt ist die gesamte Kontaktfläche des ersten und/oder zweiten Kontaktbandes aus Polyimid und/oder einem polyimidhaltigen Material. Als gesamte Kontaktfläche des ersten bzw. zweiten Kontaktbandes ist hierbei die Summe aller Oberflächenabschnitte des ersten bzw. zweiten Kontaktbandes anzusehen, die zum unmittelbaren Kontakt mit dem Substrat ausgebildet und angeordnet sind. Anders ausgedrückt kontaktieren das erste und/oder zweite Kontaktband das Substrat bevorzugt ausschließlich über eine Polyimidfläche.

Die Kontaktfläche ist bevorzugt als Beschichtung auf ein Metall, insbesondere Stahl, bevorzugt auf ein endloses Stahlband, aufgetragen. Dies hat, insbesondere gegenüber einem denkbaren Aufkleben einer Polyimidfolie, mehrere Vorteile. Zum einen lässt sich durch eine Beschichtung ein dünnerer Aufbau ermöglichen, wodurch die Wärme vom Metall, mit einem geringeren Temperaturgradienten, effizienter auf das Substrat transportiert werden kann. Zudem ist keine separate Klebeschicht notwendig, die sich, insbesondere bei hohen Prozessgeschwindigkeiten und/oder einer hohen Betriebstemperatur, ablösen kann. Die Beschichtung kann insbesondere unmittelbar auf das Metall aufgetragen sein und/oder ggf. über einen Primer als einzige Zwischenschicht aufgetragen sein.

Auch würde es bei einer aufgeklebten Folie zwangsläufig zu einer Stoßstelle der Folie kommen, die wiederum als unerwünschter Abdruck auf der Schweißnaht der hergestellten Tubenrohrkörper abgebildet wäre. Ein weiterer Nachteil einer Stoßstelle liegt darin, dass sich dort ein aufgeklebtes Band vom Stahlband zu lösen beginnen kann.

Polyimid lässt sich aufgrund seiner chemischen Unlöslichkeit und seiner Vernetzung jedoch nicht in geschmolzener Form verarbeiten, sodass ein bekanntes Beschichtungsverfahren wie es von Teflon bekannt ist, nicht übertragen werden kann. Der Erfindung liegt die Erkenntnis zugrunde, dass dennoch eine Polyimidbeschichtung auf einem Stahlband aufgetragen werden kann, indem die Beschichtung in einem zweistufigen Verfahren aufgebracht wird, welche aus dem technisch entfernten Gebiet der Kupferdrahtlacke zum Herstellen einer Isolationsschicht um einen elektrisch leitenden Draht bekannt ist, und dass diese Beschichtung im vorliegenden Gebiet mit Vorteilen verbunden ist, die die möglicherweise aufwändigere Herstellung rechtfertigen.

Die Polyimidbeschichtung der Polyimid-Kontaktfläche kann beispielsweise dadurch hergestellt werden, dass aromatische Tetracarbonsäureanhydride wie Pyromellitsäuredianhydrid (1,2,4,5-Benzoltetracarbonsäuredianhydrid) oder Biphenyltetracarbonsäuredianhydrid und aromatische Diamine wie 4,4'-Diaminodiphenylether in einem wasserfreien, polaren Lösemittel wie N-Methyl-2-pyrrolidon oder Dimethylformamid zu einer Polyamidocarbon-säure umgesetzt werden, wobei diese Lösung als Lack auf das Stahlband aufgetragen wird. Ergänzend oder alternativ kann das Stahlband in eine solche Lösung getränkt werden. Durch Anwendung hoher Temperaturen, bevorzugt über 300°C, besonders bevorzugt über 360°C, erfolgt die Umsetzung zu Polyimid, wobei sich Wasser abspaltet und das Lösemittel verdampft.

Hierdurch wird eine besonders vorteilhafte Ausbildung eines Kontaktbandes erreicht, die die Vorteile von der Verwendung von Polyimid, insbesondere gegenüber Teflon, mit den Vorteilen einer Beschichtung gegenüber einem denkbaren Aufkleben einer Polyimidfolien vereint.

Eine so hergestellte Polyimidoberfläche ist beständiger gegen Abrieb als eine PTFE-Beschichtung oder auch die Alternative einer aufgeklebten Polyimidfolie. Das Kontaktband kann weiter alternativ vollständig aus Polyimid gefertigt sein.

Bevorzugt ist die Kontaktoberfläche aus Polyimid als einstückiges Teil gefertigt, also bereits endlos hergestellt, und insbesondere nicht zum Erhalt einer endlosen Oberfläche zusammengeschweißt oder -geklebt. Hierdurch ergibt sich eine nahtlose Oberfläche.

Durch die Ausbildung der Kontaktfläche aus oder mit Polyimid lässt sich eine besonders glatte Oberfläche am Kontaktband herstellen, wodurch wiederum ebenfalls die Schweißnaht an den hergestellten Tubenkörpern glatt wird.

Die Kontaktoberfläche kann dennoch bewusst aufgeraut sein. Hierdurch wird es beispielsweise ermöglicht, dass bei den hergestellten Tubenkörpern die Schweißnaht die selbe (oder eine ähnliche) Rauheit aufweist wie die restliche Oberfläche des Tubenkörpers außerhalb der Schweißnaht. Bevorzugt hat die Kontaktfläche eine Oberflächenrauheit Rₐ zwischen 1 nm und 5 µm.

Wenn das Kontaktband eine metallische Schicht aufweist, kann es als Schweißband verwendet werden, indem die metallische Schicht durch die Energiequelle, beispielsweise induktiv durch ein hochfrequent wechselndes elektrisches Feld, erwärmt wird.

Wenn das Substrat eine metallische Schicht aufweist, kann diese metallische Schicht auf entsprechende Weise (alternativ oder ergänzend zu einer metallischen Schicht im Kontaktband) zum Schweißen erwärmt werden. So kommen bei Tubenrohrkörpern oft Aluminiumschichten wegen ihrer hohen Gasdurchtrittssperrwirkung zum Einsatz, die hier als erwärmte Schicht zum Schweißen eingesetzt werden können.

Die Substratränder können sich beim Verschweißen überlappen oder die Substratränder können auf Stoß verschweißt werden.

Bevorzugt werden die einzelnen Tubenrohrkörper durch Ablängen einer endlosen Tubenrohrform des Substrats hergestellt.

Vorzugsweise hat das erste und/oder zweite Kontaktband eine Breite zwischen 4 und 20 mm und/oder eine Längserstreckung in Umfangsrichtung (Umfangserstreckung) größer 1 m, bevorzugt größer 1,5 m. Die Breitenrichtung ist hier insbesondere zur Umfangsrichtung und zur Dickenrichtung des Kontaktbandes orthogonal und liegt bevorzugt in einer Ebene mit der Polyimid-Kontaktfläche.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine schematisierte Darstellung einer als Hochfrequenz-schweißvorrichtung ausgebildeten Schweißvorrichtung zur Herstellung von Rohrkörpern für Verpackungstuben aus einem Substrat,
- Fig. 2:: eine Schnittansicht einer als Hochfrequenz-Schweißvorrichtung ausgebildeten Schweißvorrichtung im Schweißbereich, und
- Fig.3:: eine Schweißvorrichtung mit auf Stoß angeordneten Substraträndern.

In den Figuren sind gleiche Elemente und Elemente mit der gleichen Funktion mit den gleichen Bezugszeichen gekennzeichnet.

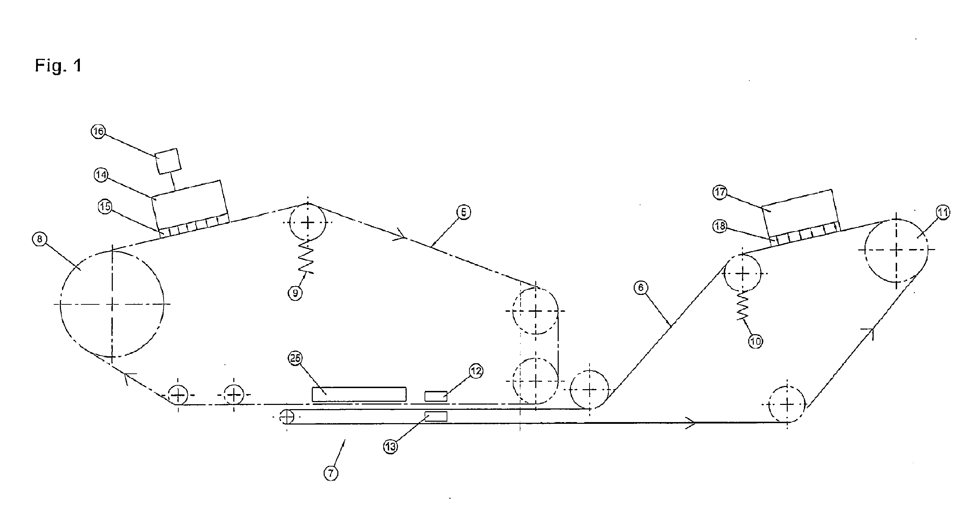

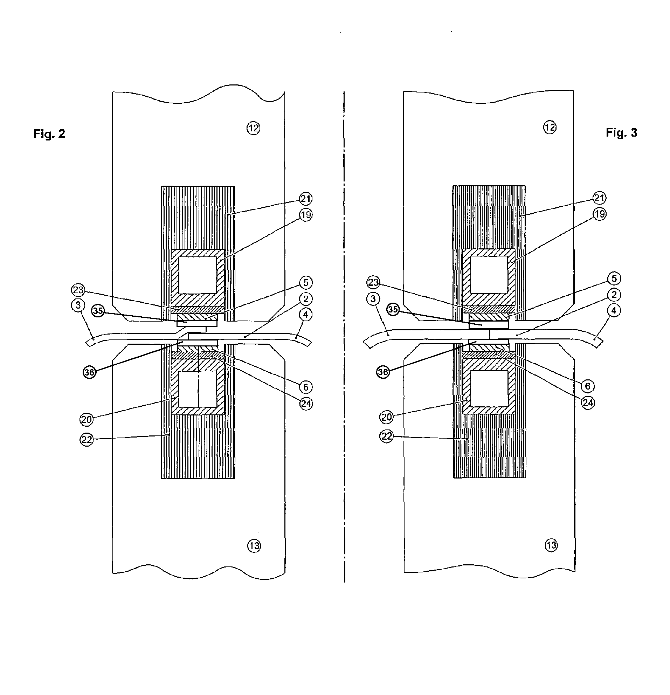

Fig. 1 zeigt wichtige Bauteile einer Schweißvorrichtung 1 zum randseitigen Verschweißen zweier in Fig. 2 dargestellter Substratränder 2, 3 eines Substrats 4. Die Substratränder 2 und 3 werden miteinander verschweißt, um so einen Rohrkörper für eine Verpackungstube zu bilden.

Die Schweißvorrichtung 1 umfasst ein erstes endloses, umlaufend angetriebenes Kontaktband 5, hier ausgebildet als Schweißband mit einem mit Polyimid beschichteten Stahlband, sowie ein abschnittsweise parallel dazu verlaufendes endloses, umlaufend angetriebenes zweites Kontaktband 6. Das zweite, hier untere, Kontaktband 6 ist in Form eines mit Polyimid beschichteten Stahlbands ausgebildet, das ein so genanntes inneres Schweißbandband bildet, das mit seinem in der Zeichnungsebene rechten Abschnitt 7 in den nicht dargestellten, herzustellenden Rohrkörper hineinragt, wohingegen das erste Kontaktband 5 entlang der äußeren Mantelfläche verläuft. Das erste Kontaktband 5 ist über eine Anzahl von Rollen geführt und es ist ein erster elektromotorischer Antrieb zum Antreiben des ersten Kontaktbandes 5 in Umfangsrichtung vorgesehen. Ferner ist dem ersten Kontaktband eine erste Spanneinrichtung 9 zum definierten Spannen des ersten Kontaktbandes 5 zugeordnet. Dem zweiten Kontaktband 6 ist eine zweite, analog aufgebaute zweite Spanneinrichtung 10 zugeordnet. Weiterhin ist ein zweiter elektromotorischer Antrieb 11 vorgesehen.

Insgesamt umfasst die Vorrichtung 1 jeweils als Hochfrequenzgenerator ausgebildete Energiequellen 12, 13 (erste Energiequelle 12, zweite Energiequelle 13), die in an sich bekannter Weise ausgebildet sind und mit dem jeweiligen Kontaktband 5, 6 zusammenwirken können. In einem Bereich zwischen den gegenüberliegenden Energiequellen 12, 13 werden die nicht dargestellten Substratränder zur Ausbildung einer Längsschweißnaht miteinander verschweißt. Den Energiequellen 12, 13 nachgeordnet ist eine von Kühlbalken gebildete Kühlzone 25 zum schnellen Abkühlen der gefügten Substratränder 2, 3.

Das erste Kontaktband 5 wurde so mit Polyimid beschichtet, dass eine Kontaktfläche 35 zum Kontaktieren des Substrats aus Polyimid ist. Die Beschichtung wurde dadurch hergestellt, dass aromatische Tetracarbonsäureanhydride, in Form von Pyromellitsäuredianhydrid (1,2,4,5-Benzoltetracarbonsäuredianhydrid), und aromatische Diamine, in Form von 4,4'-Diaminodiphenylether, in einem wasserfreien, polaren Lösemittel, in Form von N-Methyl-2-pyrrolidon (NMP), zu einer Polyamidocarbonsäure umgesetzt wurde, und diese Lösung als Lack auf das Stahlband aufgetragen wurde. Durch Anwendung einer Temperatur über 360°C erfolgte die Umsetzung zu Polyimid, wobei sich Wasser abspaltete und das Lösemittel verdampfte.

Fig. 2 dient lediglich zur Verdeutlichung der Funktionsweise der Schweißvorrichtung 1. Fig. 2 zeigt eine schematische Schnittansicht durch die Schweißzone gemäß Fig. 1.

Wie aus Fig. 2 ersichtlich ist, umfasst jede Energiequelle 12, 13 eine Spule 19, 20 und einen Ferritkern 21, 22, wobei zwischen jeder Spule 19, 20 und dem zugehörigen Kontaktband 5, 6 eine Isolationsschicht 23, 24 angeordnet ist.

Vorliegend sind beispielhaft zwei Spulen 19, 20 dargestellt. Es würde hier grundsätzlich eine Spule 19 oder 20 genügen.

Fig. 3 zeigt eine Schweißvorrichtung 1, bei der zwei auf Stoß angeordnete Substratränder 2, 3, die von zwei Schweißbändern 5, 6, welche mit geringfügig unterschiedlicher Geschwindigkeit umlaufen, sandwichartig geklemmt sind. Ansonsten entspricht die Schweißvorrichtung 1 gemäß Fig. 3 der in Fig. 2 gezeigten Schweißvorrichtung 1.

## Patentansprüche

1. Schweißvorrichtung (1) zum Herstellen von Tubenrohrkörpern durch randseitiges Verschweißen zweier Substratränder (2, 3), insbesondere zweier Laminatränder,
mit einem endlosen, umlaufenden, ersten Kontaktband (5) zum Anlegen an das Substrat (4),
einer Energiequelle (12, 13) zum Bereitstellen einer Schweißenergie,
**dadurch gekennzeichnet,**
**dass** das erste Kontaktband (5) eine Polyimid-Kontaktfläche (35) zum Anlegen an das Substrat (4) aufweist.

2. Vorrichtung nach Anspruch 1,
**dadurch gekennzeichnet,**
**dass** ein zweites endloses, umlaufendes Kontaktband (6) vorgesehen ist, das eine Polyimid-Kontaktfläche (36) zum Anlegen an das Substrat aufweist.

3. Vorrichtung nach Anspruch 2,
**dadurch gekennzeichnet,**
**dass** die Kontaktbänder (5, 6) derart angeordnet sind, dass das Substrat (4) zwischen diese aufnehmbar, insbesondere klemmbar, und mit den Kontaktbändern (5, 6) mit transportierbar sind.

4. Vorrichtung nach einem der vorhergehenden Ansprüche,
**dadurch gekennzeichnet,**
**dass** die gesamte Kontaktfläche des ersten und/oder zweiten Kontaktbandes (5 bzw. 6) zum Kontaktieren des Substrates (4), bevorzugt das gesamte erste und/oder zweite Kontaktband (5 bzw. 6), vollständig aus Polyimid ist.

5. Vorrichtung nach einem der Anspruche 1 bis 4,
**dadurch gekennzeichnet,**
**dass** die Polyimid-Kontaktfläche (35, 36) des ersten und/oder zweiten Kontaktbandes (5 bzw. 6) auf ein Metall, insbesondere Stahl, aufgetragen ist.

6. Vorrichtung nach Anspruch 5,
**dadurch gekennzeichnet,**
**dass** das Polyimid der Polyimid-Kontaktfläche (35, 36) ohne dazwischenliegende Klebeschicht unmittelbar, ggf. über einen Primer, auf das Metall aufgetragen ist.

7. Vorrichtung nach einem der vorhergehenden Ansprüche,
**dadurch gekennzeichnet,**
**dass** die Polyimid-Kontaktfläche (35, 36) des ersten und/oder zweiten Kontaktbands (5 bzw. 6) aufgeraut ist, insbesondere mit einer Rauheit Rₐ zwischen 1 nm und 5 µm.

8. Vorrichtung nach einem der vorhergehenden Ansprüche,
**dadurch gekennzeichnet,**
**dass** das Polyimid der Polyimid-Kontaktfläche (35, 36) des ersten und/oder zweiten Kontaktbands (5 bzw. 6) zu mindestens 50 Gewichtsprozent, bevorzugt mindestens 75 Gewichtsprozent, besonders bevorzugt zu mindestens 95 Gewichtsprozent, aus einem aromatischen Polyimid besteht.

9. Vorrichtung nach einem der vorhergehenden Ansprüche,
**dadurch gekennzeichnet,**
**dass** die Polyimid-Kontaktfläche (35, 36) des ersten und/oder zweiten Kontaktbands (5 bzw. 6) durch Auftragen einer Lösung mit Tetracarbonsäureanhydriden und Diamiden und anschließender Polykondensation dieser Lösung, bevorzugt bei einer Temperatur von über 300°C, besonders bevorzugt über 360°C, zu Polyimid hergestellt ist.

10. Vorrichtung nach einem der vorhergehenden Ansprüche,
**dadurch gekennzeichnet,**
**dass** das erste und/oder zweite Kontaktband (5 bzw. 6) als einstückiges Teil aus Polyimid gefertigt ist.

11. Vorrichtung nach einem der vorhergehenden Ansprüche,
**dadurch gekennzeichnet,**
**dass** die Polyimid-Kontaktfläche (35, 36) des ersten und/oder zweiten Kontaktbands (5 bzw. 6) eine Schichtdicke zwischen 5 und 100 µm, bevorzugt zwischen 10 und 40 µm, besonders bevorzugt zwischen 20 und 30 µm, aufweist.

12. Verwendung einer Schweißvorrichtung (1) nach einem der Ansprüche 1 bis 11 mit einem, bevorzugt mindestens eine Polymerschicht umfassenden, Substrat (4), zum Herstellen von Tubenrohrkörpern durch randseitiges Verschweißen zweier Substratränder (2, 3), insbesondere zweier Laminatränder eines mehrschichtigen Laminats.

13. Bevorzugt als Schweißband ausgebildetes, endloses Kontaktband zur Verwendung als erstes und/oder zweites Kontaktband in einer Schweißvorrichtung (1) nach einem der Ansprüche 1 bis 11, **dadurch gekennzeichnet, dass** eine Polyimid-Kontaktfläche (35, 36) zum Anlegen an ein Substrat zum Formen von Tubenrohrkörpern vorgesehen ist.

14. Verfahren zum Herstellen von Tubenrohrkörpern bei dem ein Substrat (4) an zwei Substratbändern (2, 3) randseitig durch eine Schweißvorrichtung (1), insbesondere nach einem der Anspruche 1 bis 11, verschweißt wird, wobei ein erstes endloses Kontaktband (5) an dem Substrat anliegt und wobei das Substrat (4) mittels einer Energiequelle (12, 13) verschweißt wird,
**dadurch gekennzeichnet,**
**dass** das erste Kontaktband (5) das Substrat (4), bevorzugt ausschließlich, mit einer Polyimid-Kontaktfläche (35, 36) kontaktiert.

15. Verfahren nach Anspruch 14,
**dadurch gekennzeichnet,**
**dass** die Energiequelle (12, 13) eine Metallschicht, insbesondere eine Aluminiumschicht, in dem Substrat (4) erhitzt.

16. Verfahren nach Anspruch 14 oder 15,
**dadurch gekennzeichnet,**
**dass** die Energiequelle (12, 13) eine Metallschicht, insbesondere Stahlschicht, in dem ersten Kontaktband (5) erhitzt, bevorzugt durch Induktion.
